# EUROPÄISCHE PATENTSCHRIFT

(11) **EP 1 245 420 B1**
(45) Veröffentlichungstag und Bekanntmachung des Hinweises auf die Patenterteilung: **07.05.2008**
(21) Anmeldenummer: 02005429.2
(22) Anmeldetag: 08.03.2002
(51) Int. Cl.: B60J 7/22

(54) **Windabweiser mit einstellbarer Stellung**
Wind deflector with adjustable position
Déflecteur de vent avec position réglable

(30) Priorität: 19.03.2001 DE 10113464; 19.09.2001 DE 10146285
(43) Veröffentlichungstag der Anmeldung: 02.10.2002
(73) Patentinhaber: Webasto AG, 82131 Stockdorf (DE)
(72) Erfinder: Wingen, Bernhard, 83620 Feldkirchen (DE); Schleicher, Bernd, 80689 München (DE); Hase, Bernd, 85774 Unterföhring (DE)
(74) Vertreter: Wiese, Gerhard

(56) Entgegenhaltungen:
- DE-A- 19 701 479
- US-B1- 6 174 025

## Beschreibung

Die vorliegende Erfindung betrifft ein Fahrzeugdach mit mindestens einem Deckel, der zum wahlweisen Verschließen und mindestens teilweisen Freilegen einer Dachöffnung mittels einer Deckelantriebsvorrichtung verschiebbar ist, sowie mit einem im Bereich des vorderen Randes der Dachöffnung angeordneten Windabweiser, der mittels einer Ausstellmechanik zwischen einer Ruhestellung bei geschlossenem Deckel sowie einer voll ausgestellten Position und mindestens einer zwischen diesen Endpositionen liegenden vorbestimmten Zwischenposition beim Öffnen des Deckels verstellbar ist, wobei die Ausstellmechanik eine Stelleinrichtung zum Beeinflussen der Ausstellhöhe des Windabweisers aufweist. Zusätzlich zu den Endpositionen sind gezielte Zwischenpositionen des Windabweisers erwünscht, um die Windabweiserfunktion in Abhängigkeit von den jeweiligen Fahrbedingungen, insbesondere dem Öffnungsgrad des Deckels und/oder der Fahrgeschwindigkeit, optimieren zu können.

Aus der DE 197 01 479 A1 ist ein gattungsgemäßes Fahrzeugdach bekannt, bei dem die Ausstellhöhe eines Windabweisers mittels einer in Längsrichtung verschiebbaren Steuerkurve einstellbar ist. Die Steuerkurve wird mittels eines Antriebs verfahren, der als separater Antrieb ausgebildet ist oder der mit dem Antrieb des Schiebedachs gekoppelt ist.

Bei einem weiteren bekannten Fahrzeugdach gemäß der DE 198 09 943 A1 ist der Windabweiser bezüglich seiner Ausstellhöhe durch einen von dem Antrieb des Deckels unabhängigen Antrieb eines Schiebehimmels gesteuert. Es sind ferner Fahrzeugdächer bekannt, bei denen die Betätigung des Windabweisers mit einem separaten Elektromotor erfolgt (DE 198 02 301 A1). Diese Ausführungsformen erfordern beide außer dem Deckelantrieb einen zusätzlichen Antriebsmotor.

Es ist auch bekannt, den Windabweiser mittels des Auslaufendes der Deckel-Antriebskabel zu verstellen (DE 199 07 806 A1). Dabei sind die Antriebskabel-Auslaufenden mit einem Schlitten fest verbunden, der gegenläufig zu jeder Deckelverschiebebewegung verschoben wird, aber mit der Ausstellmechanik des Windabweisers erst in Eingriff kommt, nachdem der Deckel um eine vorbestimmte Strecke in Öffnungsrichtung verstellt ist. Eine solche Lösung kann in schon vorhandene Dachkonstruktionen oft nur schwer oder gar nicht integriert werden.

Es ist Aufgabe der vorliegenden Erfindung, ein Fahrzeugdach mit einem bei mindestens teilweise geöffnetem Deckel in unterschiedliche Ausstellhöhen bringbaren Windabweiser zu schaffen, das mit relativ geringem Aufwand eine zuverlässige Anpassung des Windabweiser-Ausstellgrades an die Fahrbedingungen gestattet und dessen die Ausstellhöhe des Windabweisers beeinflussenden Teile auch besser in bereits vorhandene Dachkonstruktionen eingebunden werden können.

Diese Aufgabe wird erfindungsgemäß durch die Merkmale des Patentanspruchs 1 gelöst. Dabei ist ein Teil der Stelleinrichtung nur in einem vorgegebenen Teilbereich der Deckelverschiebebewegung mit der Deckelantriebsvorrichtung gekuppelt, um nur in diesem Teilbereich der Deckelverschiebebewegung die Ausstellhöhe des Windabweisers in Abhängigkeit von der jeweiligen Deckelstellung gezielt zu verändern, während der entsprechende Mitnehmer im übrigen Teilbereich der Deckelverschiebebewegung mit einem dachfesten Teil gekuppelt ist .

Bei der erfindungsgemäßen Lösung ist vorteilhaft, dass neben dem ohnehin vorhandenen Deckelantrieb kein zusätzlicher Motor für das Positionieren des Windabweisers benötigt wird. Der von der Deckelantriebsvorrichtung mitnehmbare Teil der Stelleinrichtung wird nicht im vollen Bereich der Deckelverschiebebewegung verstellt, sondern nur in dem Teilbereich dieser Verschiebebewegung, innerhalb dessen ein Variieren der Ausstellhöhe des Windabweisers gefordert ist. Dies reduziert nicht nur die insgesamt ablaufenden Verschiebebewegungen der verschiedenen Dachteile, sondern erleichtert es, für eine Feinanpassung der Ausstellhöhe des Windabweisers auch noch nachträglich bei schon vorhandenen Dachkonstruktionen zu sorgen.

Bevorzugte weitere Ausgestaltungen der Erfindung ergeben sich aus den Unteransprüchen.

So wird ein mechanisch besonders einfacher Aufbau erreicht, wenn der mit der Deckelantriebsvorrichtung in einem vorgegebenen Teilbereich der Deckelverschiebebewegung kuppelbare Teil der Nockenstelleinrichtung gleichsinnig mit der Deckelverschiebebewegung verstellbar ist. Dazu trägt ferner bei, wenn der Windabweiser in Ausstellrichtung federnd vorgespannt ist und die Nockenstelleinrichtung die Verstellung des Windabweisers in Ausstellrichtung begrenzt.

In weiterer Ausgestaltung der Erfindung ist der mit der Deckelantriebsvorrichtung in einem vorgegebenen Teilbereich der Deckelverschiebebewegung kuppelbare Teil der Stelleinrichtung ein Steuerschieber mit einer Nockenbahn, die mit einem Nocken an einem die Ausstellhöhe des Windabweisers bestimmenden Stellhebel zusammenwirkt. Die Gestaltung einer solchen Nockenbahn kann auf flexible, gleichwohl aber sehr einfache Weise den praktischen Erfordernissen der jeweiligen Dachkonstruktion angepasst werden. So können insbesondere für unterschiedliche Teilbereiche der Deckelverschiebebewegung unterschiedliche konstante oder sich entsprechend einer vorgegebenen Funktion ändernde Windabweiser-Ausstellhöhen vorgesehen sein. Bei der Nockenbahn kann es sich um eine einseitig offene Nockenbahn handeln. Stattdessen kann aber auch eine Nockenbahn in Schlitzform, das heißt ein sogenannter Kulissenschlitz, vorgesehen sein.

Zweckmäßig ist der Stellhebel um eine dachfeste Schwenkachse schwenkbar, während der Steuerschieber in Deckelverschieberichtung verstellbar gelagert ist.

Die Schwenkachse des Stellhebels verläuft vorzugsweise im Wesentlichen in Dachquerrichtung. Vorzugsweise ist ferner der Nocken von dem einen Ende des Stellhebels gebildet, während der Stellhebel im Bereich seines anderen Endes an einem windabweiserfesten Teil anliegt und den Windabweiser entgegen der Federvorspannung in der von der Nockenbahn bestimmten Ausstellhöhe hält.

Eine Begrenzung der Ausstellhöhe des in Ausstellrichtung federnd vorgespannten Windabweisers ist ferner auf einfache und dennoch flexibel an die gegebenen Einbauverhältnisse anpassbare Weise durch eine Rückhaltevorrichtung möglich, die zwischen dem Windabweiser und der Ausstellmechanik vorsehbar ist.

Eine in vertikaler Richtung, d.h. im Wesentlichen senkrecht zu einer den Deckel umfassenden Ebene besonders schmal bauende Konstruktion lässt sich erzielen, wenn die Rückhaltevorrichtung nicht starr ausgebildet ist, sondern bei Verstellung des Windabweisers in Richtung auf seine Ruhestellung von einer ausgefahrenen in eine in vertikaler Richtung einen kleineren Raum einnehmende eingefahrene Position bringbar ist. Auf diese Weise kann auch die von der Stelleinrichtung - insbesondere durch das Zusammenwirken von Steuerschieber und Stellhebel - vorgegebene maximale Ausstellhöhe wesentlich vergrößert werden, ohne dass ein größerer Bauraum benötigt wird.

Vorzugsweise ist dabei die Rückhaltevorrichtung zwischen dem Windabweiser und dem Stellhebel vorgesehen. Die Rückhaltevorrichtung ist zweckmäßiger Weise einerseits mittelbar oder unmittelbar am Windabweiser angebracht, andererseits wenigstens in ausgefahrener Position insbesondere an das vordere Ende des Stellhebels anlegbar.

In besonderer Ausgestaltung der Erfindung kann die Rückhaltevorrichtung einen um eine im Wesentlichen horizontal liegende Achse schwenkbaren Hebel umfassen. Weiterhin ist es möglich, die Rückhaltevorrichtung so auszubilden, dass sie ein im Wesentlichen in vertikaler Richtung zusammenschiebbares Bauelement aufweist. Darüber hinaus kann die Rückhaltevorrichtung ein biegeelastisches Band, insbesondere in Form eines Gurtbandes umfassen. Schließlich können die genannten Bauelemente auch in Kombination verwendet werden.

Zur Minimierung des Aufwandes für die Windabweiserverstellung trägt bei, wenn die Schaltkupplung selbsttätig in Abhängigkeit von der Bewegung der Deckelantriebsvorrichtung geschaltet ist, wobei die Schaltkupplung einfach als Riegelsteinkupplung ausgebildet sein kann. Dabei kann zweckmäßig ein federvorgespannter Schieber vorgesehen sein, der einen in dem Mitnehmer verstellbar gelagerten Riegelstein der Riegelsteinkupplung mit dem dachfesten Teil im wesentlichen so lange in Eingriff hält, wie der Mitnehmer von der Deckelantriebsvorrichtung abgekuppelt ist.

Insbesondere bei Dachkonstruktionen, bei denen die Deckelantriebsvorrichtung am hinteren Bereich des Deckels angreift, kann der mit der Deckelantriebsvorrichtung in einem vorgegebenen Teilbereich der Deckelverschiebebewegung kuppelbare Teil der Stelleinrichtung mit dem Mitnehmer über eine an einer seitlichen Führungsschiene abgestützte Verbindungsstange in Antriebsverbindung stehen. Eine solche Verbindungsstange kann zweckmäßig in einem Kanal der Führungsschiene oder in einer mit der Führungsschiene fest verbundenen Anbaugruppe gelagert sein. Eine solche Anbaugruppe eignet sich vor allem in Fällen, bei denen eine vorhandene Dachkonstruktion nachträglich mit einer Feinverstellung für den Windabweiser ausgestattet werden soll.

In weiterer Ausgestaltung der Erfindung ist als Schaltkupplung alternativ zur Riegelsteinkupplung eine Schalthebelkupplung vorgesehen. Vorzugsweise ist die Schalthebelkupplung so ausgebildet, dass der Mitnehmer mit der Deckelantriebsvorrichtung im Wesentlichen nur in solchen Teilbereichen der Deckelverschiebebewegung gekuppelt ist, in welchen eine Verstellung des Windabweisers mittels der Ausstellmechanik erfolgt.

Zweckmäßig umfasst die Schalthebelkupplung einen schwenkbaren Schalthebel, der mittels einer Steuerkulisse betätigbar ist. Dabei lässt sich ein besonders einfacher Aufbau erzielen, wenn der Schalthebel an einem Teil der Deckelantriebsvorrichtung und die Steuerkulisse an dem dachfesten Teil vorgesehen ist. Die Steuerkulisse kann eine einseitig offene Kulissenbahn aufweisen, an welcher der Schalthebel federnd vorgespannt anlegbar ist. Alternativ kann aber auch eine Zwangsführung des Schalthebels mittels einer Kulissenbahn in Schlitzform vorgesehen sein.

Der Mitnehmer ist in solchen Teilbereichen der Deckelverschiebbewegung, in denen er von der Deckelantriebsvorrichtung abgekuppelt ist, bevorzugt mittels einer federbetätigten Rastvorrichtung dachfest arretierbar.

Bevorzugte Ausführungsbeispiele der Erfindung sind im Folgenden anhand der beigefügten Zeichnung näher erläutert. Dabei zeigen:
- Fig. 1: einen schematischen Längsschnitt des vorderen Teils eines ersten Ausführungsbeispiels eines Schiebedaches mit Windabweiser,
- Fig. 2: einen schematischen Längsschnitt des hinteren Teils des Schiebedaches der Fig. 1,
- Fig. 3: eine perspektivische Draufsicht auf den linken vorderen Teil des Schiebedaches gemäß Fig. 1,
- Fig. 4: eine perspektivische Draufsicht auf den linken hinteren Teil des Schiebedaches gemäß Fig. 2,
- Fig. 5: einen schematischen Längsschnitt des vorderen Teils eines zweiten Ausführungsbeispiels eines Schiebedaches mit Windabweiser und einer Rückhaltevorrichtung für den Windabweiser,
- Fig. 6: eine perspektivische Draufsicht auf den linken vorderen Teil eines Schiebedaches gemäß einer dritten Ausführungsform mit einer abgewandelten Rückhaltevorrichtung für den Windabweiser;
- Fig. 7: einen schematischen Schnitt entlang der Linie VII-VII der Fig. 6,
- Fig. 8: eine Schnittdarstellung ähnlich derjenigen gemäß Fig. 7 für eine vierte Ausführungsform eines Schiebedaches mit einer abgewandelten Rückhaltevorrichtung,
- Fig. 9: eine perspektivische Draufsicht ähnlich Fig. 4 mit einer abgewandelten Schaltkupplung für Schiebedächer nach den Ausführungsformen zwei bis vier, sowie
- Fign. 10 a-d: schematische Darstellungen verschiedener Phasen des Bewegungsablaufs der Schaltkupplung gemäß Fig. 9.

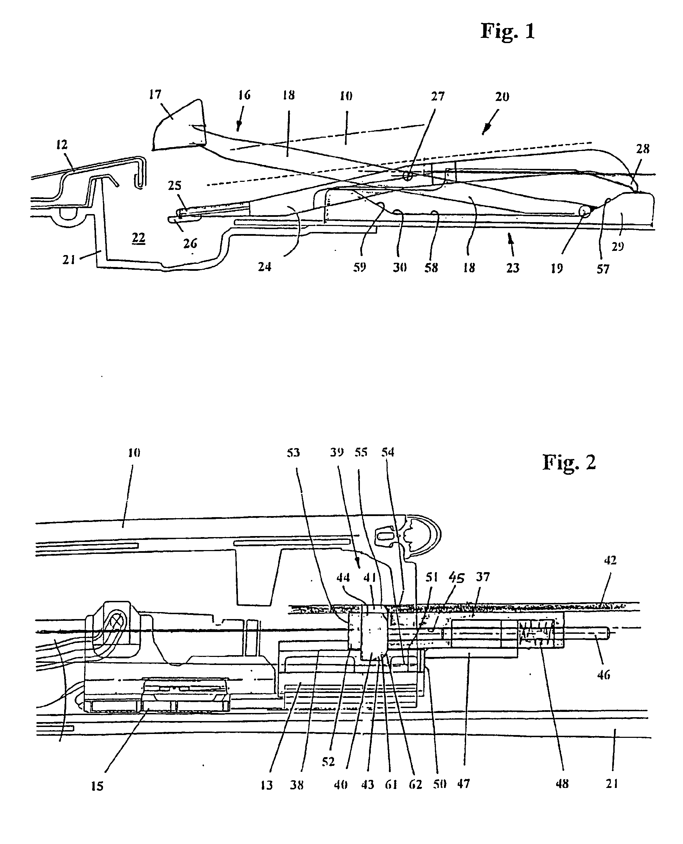

Bei dem in den Figuren 1 bis 4 dargestellten ersten Ausführungsbeispiel des erfindungsgemäßen Fahrzeugdaches handelt es sich um ein Schiebe- oder Schiebehebedach mit einem verschiebbaren Deckel 10 zum wahlweisen Verschließen und mindestens teilweisen Freilegen einer Dachöffnung 11, die in einer festen Dachhaut 12 ausgebildet ist. Zum Verstellen des Deckels 10 kann eine Deckelantriebsvorrichtung bekannter Art vorgesehen sein. Zu dieser Antriebsvorrichtung gehören im vorliegenden Ausführungsbeispiel Antriebsschlitten 13, von denen jeweils einer zu beiden Seiten des Deckels 10 mit dem Deckel in dessen hinterem Bereich in Antriebsverbindung steht und in einer seitlichen Führungsschiene 14 in der Deckelverschieberichtung verschiebbar geführt ist. Die Deckelverschieberichtung entspricht der Längsrichtung des mit dem Fahrzeugdach ausgestatteten Fahrzeugs, und die vorliegend verwendeten Begriffe "vorne" und "hinten" beziehen sich auf die normale Fahrtrichtung des Fahrzeugs.

Die Antriebsschlitten 13 stehen in üblicher Weise über drucksteife Antriebskabel 15 mit einer nicht dargestellten Antriebseinheit, normalerweise in Form eines Getriebemotors, in Antriebsverbindung. Im Bereich des vorderen Randes der Dachöffnung 11 ist ein Windabweiser 16 angeordnet, der im gezeigten Ausführungsbeispiel ein parallel zu dem vorderen Dachöffnungsrand ausgerichtetes Windabweiserblatt 17 und zwei seitliche Windabweiserarme 18 aufweist, die an einem Gelenk 19 um eine in Dachquerrichtung verlaufende Schwenkachse schwenkbar sind. In der Ruhestellung taucht das Windabweiserblatt 17 unter den Deckel 10 in einen von einem Dachrahmen 21 begrenzten Raum 22. In der voll ausgestellten Position steht das Windabweiserblatt 17 oberhalb der Dachebene. Der Windabweiser 16 kann außerdem mittels einer deckelfesten Ausstellmechanik in mindestens eine vorbestimmte Zwischenposition zwischen der Ruhestellung und der voll ausgestellten Position gebracht werden. In einer solchen Zwischenposition ist der Windabweiser 16 in Fig. 1 veranschaulicht. Mittels einer insgesamt mit 20 bezeichneten Ausstellmechanik ist der Windabweiser zwischen der Zwischenposition und einer voll ausgestellten Position verstellbar.

Bei dem dargestellten ersten Ausführungsbeispiel ist der Windabweiser 16 in Ausstellrichtung federnd vorgespannt, z.B. mittels nicht dargestellter Ausstellfedern, die die Windabweiserarme 18 um das Gelenk 19 in Fig. 1 im Uhrzeigersinn zu schwenken suchen. Die Verstellung des Windabweisers 16 in Ausstellrichtung wird über eine gleichfalls zu der Ausstellmechanik 20 gehörende, insgesamt mit 23 bezeichnete Stelleinrichtung begrenzt, die mit einem Stellhebel 24 der Ausstellmechanik zusammenwirkt. Das eine (vordere) Ende 25 des Stellhebels 24 liegt auf einer Lasche 26 des Windabweisers 16 auf. Der Stellhebel 24 ist um eine dachfeste Schwenkachse 27 schwenkbar, die im Wesentlichen in Dachquerrichtung verläuft. Die fest mit dem Windabweiser 16 verbundene Lasche 26 ist Teil einer starren Rückhaltevorrichtung für den Windabweiser 16, die bewirkt, dass der Windabweiser 16 von den Ausstellfedern nur maximal soweit ausgestellt werden kann, bis die Lasche 26 von unten an dem Ende 25 des Stellhebels 24 zum Anliegen kommt. Befindet sich der Windabweiser 16 in seiner Ruheposition, taucht die Lasche 26 in den Raum 22 ein.

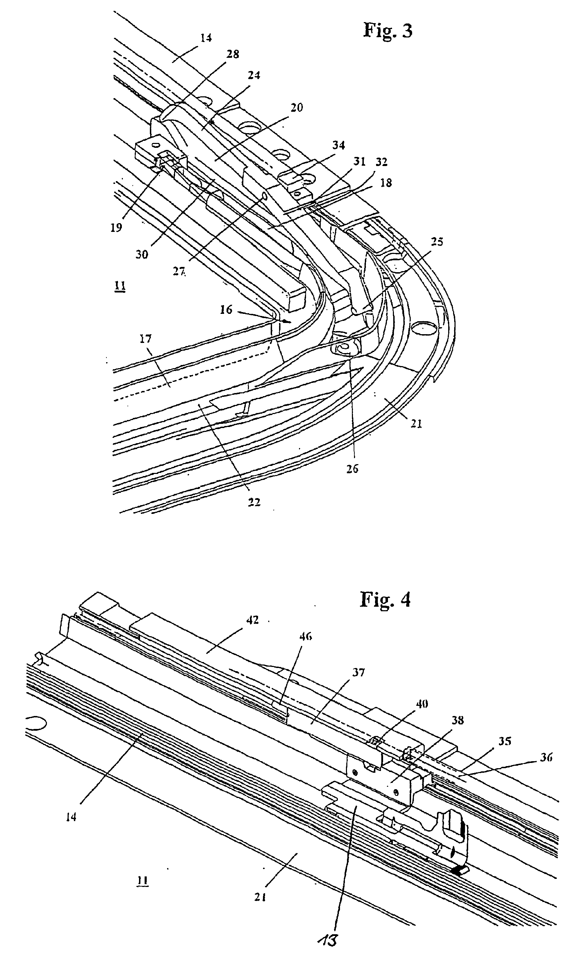

Das von dem Windabweiserblatt 17 entfernt liegende hintere Ende des Stellhebels 24 bildet einen Nocken 28, der Teil der Stelleinrichtung 23 ist, zu der ferner ein entlang einem vorderen Teil der Führungsschiene 14 verschiebbar geführter Steuerschieber 29 mit einer Nockenbahn 30 gehört. An einer zwischen dem Hebelende 25 und der Schwenkachse 27 liegenden Stelle steht von dem Stellhebel 24 ein Stift 31 seitlich ab (Fig. 3). Unter den Stift 31 greift eine deckelfest angebrachte Blattfeder 32, die den Stellhebel 24 in Fig. 1 im Uhrzeigersinn zu verschwenken sucht und dadurch den Nocken 28 mit der Nockenbahn 30 bei geschlossenem Deckel in sicherem Eingriff hält. Durch Verschieben des Steuerschiebers 29 wird der Stellhebel 24 verschwenkt, was durch den Eingriff des Stellhebelendes 25 mit der Windabweiserlasche 26 eine Änderung der Ausstellhöhe des Windabweisers 16 bewirkt.

Eine Verbindungsstange 36 ist in einem Kanal der Führungsschiene 14 oder, wie im Falle des veranschaulichten ersten Ausführungsbeispiels, in einer an der Führungsschiene 14 befestigten Anbaugruppe abgestützt, zu der ein vorderes Aufsatzteil 34, ein Führungsrohr 35 (Fig. 4) und ein hinteres Aufsatzteil 42 gehören. Bei der Verbindungsstange 36 kann es sich beispielsweise um ein Spiralkabel mit an den Kabelenden angespritzten Mitnehmerstücken handeln. Die Verbindungsstange 36 ist an ihrem einen (vorderen) Ende an dem Steuerschieber 29 und an ihrem anderen (hinteren) Ende an einem entlang der Führungsschiene 14 verschiebbar geführten Mitnehmer 37 angebracht. An dem Antriebsschlitten 13 ist ein (gleichfalls entlang der Führungsschiene 14 verschiebbarer) Einsatz 38 befestigt oder mit angespritzt.

Eine insgesamt mit 39 bezeichnete Schaltkupplung erlaubt es, den Mitnehmer 37 und damit - über die Verbindungsstange 36 - den Steuerschieber 29 in einem vorgegebenen Teilbereich der Verschiebebewegung des Deckels 10 mit dem Antriebsschlitten 13 des Deckelantriebes zu kuppeln und in dem restlichen Teil der Deckelverschiebebewegung mit Bezug auf die Führungsschiene 14, das heißt dachfest, zu arretieren. Die Schaltkupplung 39 ist als Riegelsteinkupplung mit einem Riegelstein 40 ausgebildet, der in einem im Wesentlichen lotrecht verlaufenden Führungskanal 44 des Mitnehmers 37 verstellbar gelagert ist. Der Riegelstein 40 steht von dem Mitnehmer 37 entweder nach oben oder nach unten vor. Er legt sich dabei entweder nach oben in eine Ausnehmung 41 des mit der Führungsschiene 14 fest verbundenen hinteren Aufsatzteiles 42 oder eine Ausnehmung 43 des Antriebsschlitteneinsatzes 38 ein. In einer Längsbohrung 45 des Mitnehmers 37 ist ein Stift 46 längsverschiebbar gelagert. An dem Stift 46 ist ein Schieber 47 befestigt, der mittels einer Feder 48 nach vorne in Richtung auf den Riegelstein 40 vorgespannt ist und der den Mitnehmer 37 untergreift.

Die beschriebene Anordnung gemäß der ersten Ausführungsform funktioniert in folgender Weise:

In der Schließstellung des Deckels 10 legen sich an der Unterseite des Deckels angebrachte (nicht veranschaulichte) Nocken in üblicher Weise gegen die Windabweiserarme 18 an. Dadurch wird der Windabweiser 16 entgegen Federvorspannung in seiner Ruhestellung unterhalb des geschlossenen Deckels 10 gehatten. Der Riegelstein 40 greift dabei in die Ausnehmung 41 des Aufsatzteiles 42 ein. Infolgedessen stellt die Schaltkupplung 39 eine Verbindung zwischen dem Mitnehmer 37 und der Führungsschiene 14 her. Die Nockenstelleinrichtung 23 ist in der in Fig. 1 veranschaulichten Lage arretiert.

Wird der Deckel 10 über die Antriebskabel 15 und die zu seinen beiden Seiten angeordneten Antriebsschlitten 13 nach hinten verschoben, geben die mit den Windabweiserarmen 18 zusammenwirkenden, deckelfesten (nicht dargestellten) Nocken den Windabweiser 16 frei. Der Windabweiser 16 wird unter dem Einfluss der auf ihn einwirkenden Federvorspannung in die in Fig. 1 veranschaulichte Zwischenposition ausgestellt. Diese Zwischenposition kann, wie in Fig. 1 angedeutet, so gewählt sein, dass das Windabweiserblatt 17 vom Fahrtwind nur überströmt wird. Die Ausstellhöhe wird dabei dadurch begrenzt, dass sich die Lasche 26 des Windabweisers von unten gegen das Ende 25 des Stellhebels 24 anlegt, dessen den Nocken 28 bildendes hinteres Ende gegen einen hoch liegenden Teil 49 der Nockenbahn 30 angedrückt ist. Die Nockenstelleinrichtung 23 und damit auch der Windabweiser 16 verharren in der Position gemäß Fig. 1, bis der Deckel 10 durch Verschieben des Antriebsschlittens 13 nach hinten über beispielsweise etwa 2/3 seines Verstellweges in Öffnungsrichtung verfahren ist.

Dann trifft eine hintere Stirnfläche 50 des Antriebsschlitteneinsatzes 38 auf das vordere Ende des Schiebers 47 und drückt den Schieber 47 entgegen der Kraft der Feder 48 nach hinten unter dem Riegelstein 40 weg. Ein hinterer Teil 51 der Oberseite des Antriebsschlitteneinsatzes 38 legt sich unter den Riegelstein 40 und hält diesen zunächst noch in Eingriff mit der Ausnehmung 41 des dachfesten Aufsatzes 42. Wenn sich bei weiterem Verschieben des Deckels 10 nach hinten die Ausnehmung 43 des Antriebsschlitteneinsatzes 38 unter dem Riegelstein 40 befindet, trifft eine Stirnkante 52 des Einsatzes 38 auf die vordere Stirnfläche 53 des Mitnehmers 37. Auf den Mitnehmer 37 und damit auch auf den Riegelstein 40 wird eine nach hinten gerichtete Kraft ausgeübt. Dabei wird durch gegenseitige Anlage von Schrägflächen 54 und 55 des Riegelsteins 40 bzw. des Aufsatzes 42 eine nach unten gerichtete Kraftkomponente auf den Riegelstein 40 aufgebracht. Diese Kraftkomponente bewirkt, dass der Riegelstein 40 außer Eingriff mit der Ausnehmung 41 kommt und sich in die Ausnehmung 43 des Antriebsschlitteneinsatzes 38 einlegt. Dadurch ist die Verriegelung der Nockenstelleinrichtung 23 aufgehoben, und der Steuerschieber 29 ist über die Verbindungsstange 36 und die Schaltkupplung 39 mit dem Antriebsschlitten 13 in Antriebsverbindung gebracht.

Bei weiterem Verstellen des Deckels 10 nach hinten wird dementsprechend der Steuerschieber 29 nach hinten mitgenommen. Dabei kommt eine Rampe 57 der Nockenbahn 30 unter den Nocken 28 zu liegen. Der Stellhebel 24 schwenkt unter dem Einfluss der auf ihn einwirkenden Federvorspannkraft in Fig. 1 im Uhrzeigersinn. Das vordere Stellhebelende 25 wandert entsprechend nach oben, so dass die auf den Windabweiser 16 einwirkende Federvorspannkraft das Windabweiserblatt 17 weiter ausstellt. Wenn ein langgestreckter tiefliegender Teil 58 der Nockenbahn 30 unter dem Nocken 28 zu liegen kommt, erreicht der Windabweiser 16 seine voll ausgestellte Position. Diese Position kann in an sich bekannter Weise vorzugsweise so gewählt sein, dass der Windabweiser zwecks Minimierung von Wummergeräuschen vom Fahrtwind sowohl oben als auch unten umströmt wird

Am Ende der Rückwärtsbewegung des Deckels 10 schiebt sich eine Rampe 59 der Nockenbahn 30 unter den Nocken 28 des Stellhebels 24. Dadurch wird der Windabweiser 16 in eine Zwischenposition abgesenkt, die vorteilhaft so gewählt ist, dass störende Windgeräusche bei Hochgeschwindigkeitsfahrt minimiert werden.

Wird der Deckel 10 ausgehend von seiner Offenstellung nach vorne verstellt, wird über Schrägflächen 61 und 62 der Ausnehmung 43 bzw. des Riegelsteins 40 eine nach oben gerichtete Kraftkomponente auf den Riegelstein 40 aufgebracht. Der Riegelstein 40 wird jedoch zunächst an einer Verlagerung in dem Mitnehmer 37 nach oben dadurch gehindert, dass seine Oberseite an der Unterseite des dachfesten Aufsatzes 42 anliegt. Sobald jedoch der Riegelstein 40 unter der Ausnehmung 41 zu liegen kommt, verlagert sich der Riegelstein 40 nach oben; durch seinen Eingriff in die Ausnehmung 41 wird die Verriegelung des Steuerschiebers 29 mit der dachfesten Führungsschiene 14 wieder hergestellt.

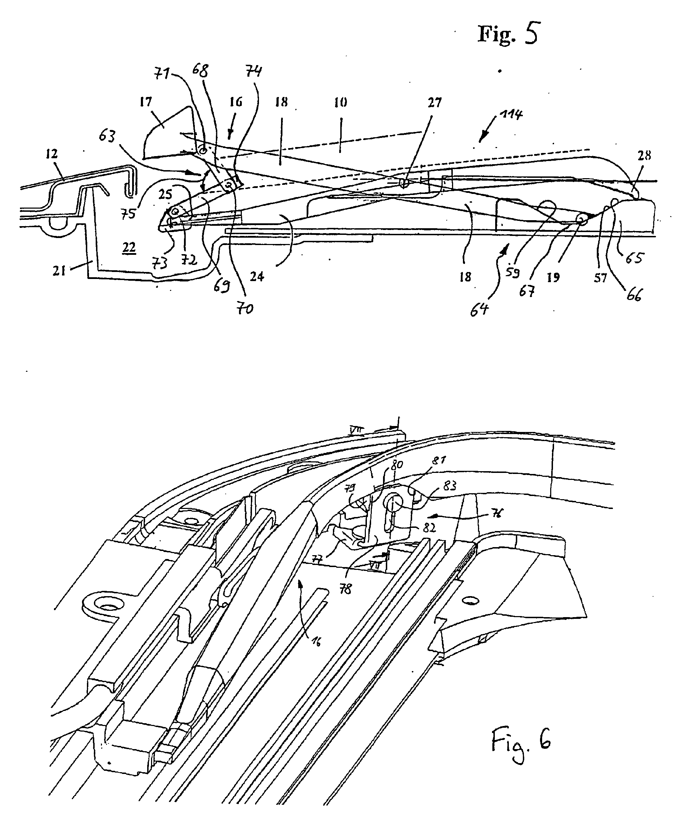

Ein zweites Ausführungsbeispiel des erfindungsgemäßen Fahrzeugdaches gemäß den Fign. 5, 9 und 10 unterscheidet sich von dem ersten, in den Fign. 1 bis 4 dargestellten Fahrzeugdach im Wesentlichen nur durch eine einfahrbare, nicht starre Rückhaltevorrichtung 63, eine abgewandelte Ausstellmechanik 114 sowie eine abgeänderte Schaltkupplung 89.

Die Rückhaltevorrichtung 63 umfasst einen zweiarmigen Hebel, dessen Hebelarme 68 und 69 über ein Gelenk 70 mit im Wesentlichen horizontal liegender Achse schwenkbar verbunden sind. Dabei begrenzt ein am gelenkseitigen Ende des Hebelarms 69 angebrachter Anschlag 74 den maximal erreichbaren Winkel zwischen den Hebelarmen 68 und 69 auf einen maximalen Schwenkwinkel 75, der einer ausgefahrenen Position der Rückhaltevorrichtung 63 entspricht. Der Hebelarm 68 der Rückhaltevorrichtung 63 ist über ein Gelenk 71 an einem vorderen Endes des Windabweiserarms 18 schwenkbar angebracht, ein weiteres Gelenk 72 verbindet den Hebelarm 69 mit einer Lasche 73, deren unteres abgekröpftes Ende von unten an das Ende 25 des Stellhebels 24 anlegbar ist und auf diese Weise die maximale Ausstellhöhe des Windabweisers 16 bei gegebener Stellung des Stellhebels 24 begrenzt. Wird der Windabweiser 16 ausgehend von der Zwischenposition gemäß Fig. 5 durch die sich beim weiteren Schließen des Deckels 10 gegen die Windabweiserarme 18 anlegenden deckelfesten Nocken in seine Ruheposition gebracht, lässt sich der Hebel der Rückhaltevorrichtung 63 durch Verschwenken um das Gelenk 70 zusammenklappen, so dass die Lasche 73 nur noch geringfügig in den Raum 22 eintaucht. Durch Variation der Geometrie der Rückhaltevorrichtung 63 lassen sich auf einfache Weise die maximale Ausstellhöhe und der benötigte vertikale Bauraum für das Eintauchen der Lasche 73 optimieren. Vorzugsweise ist eine nicht dargestellte Federvorrichtung, beispielsweise unter Verwendung einer Spiralfeder am Gelenk 70, vorgesehen, die so ausgelegt ist, dass die Lasche 73 jederzeit leicht federnd vorgespannt am Ende 25 des Stellarms 24 von unten anliegt.

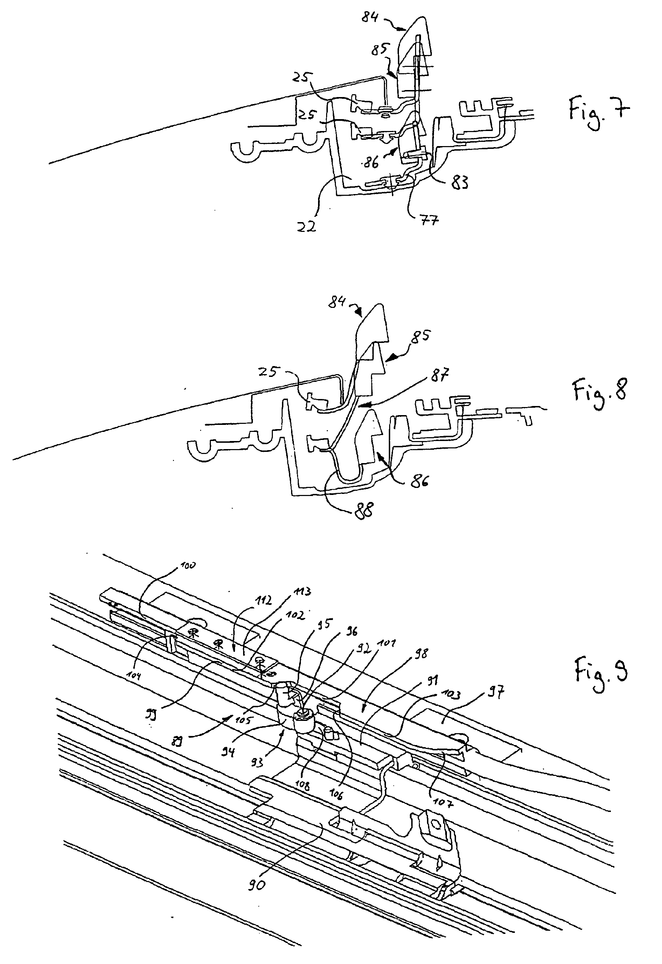

Alternativ zur Rückhaltevorrichtung 63 kommt im dritten Ausführungsbeispiel des Fahrzeugdaches gemäß den Fign. 6 und 7 eine abgewandelte Rückhaltevorrichtung 76 zum Einsatz, die ebenfalls in vertikaler Richtung einfahrbar ist, jedoch nicht durch Verschwenken zweier Hebelarme 68, 69, sondern durch im Wesentlichen vertikales Verschieben eines Schenkels 78 einer etwa L-förmigen Lasche 77 der Rückhaltevorrichtung 76 längs einer Nut mit Führungsflächen 80, 81 in einem am Windabweiser 16 festgelegten Halter 79. Der maximale Verstellweg der Rückhaltevorrichtung zwischen der eingefahrenen und der ausgefahrenen Position wird durch ein Langloch 82 im Schenkel 78 vorgegeben, welches mit einem Stift 83 zusammenwirkt, der das Langloch 82 durchsetzt und im Halter 79 angebracht ist. Wie in Fig. 7 dargestellt ist, liegt sowohl in einer voll ausgestellten Position 84 als auch in einer Zwischenposition 85 des Windabweisers 16 ein unterer Schenkel der Lasche 77 am vorderen Ende 25 des Stellhebels 24 von unten an. Bei Übergang des Windabweisers 16 in seine Ruheposition 86 kommt der untere Schenkel der Lasche 77 am Boden des Raumes 22 zur Anlage und die Rückhaltevorrichtung 76 wird in vertikaler Richtung zusammengeschoben.

Die Fig. 8 zeigt eine vierte Ausführungsform des Fahrzeugdaches, bei der eine weitere abgewandelte Rückhaltevorrichtung 87 verwendet wird, die sich von den Rückhaltevorrichtungen 63 und 76 hauptsächlich dadurch unterscheidet, dass sie ein biegeelastisches Band in Form eines Gurtbandes 88 umfasst, welches einerseits am Windabweiser 16 und andererseits am vorderen Ende 25 des Stellhebels 24 festgelegt ist. Das Gurtband ist in der voll ausgefahrenen Position 84 und in der Zwischenposition 85 des Windabweisers 16 gespannt und begrenzt somit die Ausstellhöhe des Windabweisers 16 in Abhängigkeit von der jeweiligen Stellung des Stellhebels 24. In der Ruheposition des Windabweisers 16 ist das Gurtband 88 entspannt und kann sich raumsparend zusammenlegen.

Es versteht sich, dass die einfahrbaren Rückhaltevorrichtungen 63, 76 und 87 nicht nur in Verbindung mit der Ausstellmechanik 114 und der Schaltkupplung 89 der Ausführungsbeispiele zwei bis vier, sondern in gleicher Weise auch bei der ersten Ausführungsform gemäß den Fign. 1 bis 4 zum Einsatz kommen und dort die starre Rückhaltevorrichtung mit der Lasche 26 ersetzen können.

Die bereits erwähnte, in Fig. 5 gezeigte Ausstellmechanik 114 der Ausführungsbeispiele zwei bis vier unterscheidet sich von der Ausstellmechanik 20 gemäß Fig. 1 hauptsächlich durch eine Stelleinrichtung 64 mit verkürztem Steuerschieber 65. Abweichend vom Steuerschieber 29 mit langgestrecktem tiefer liegenden Teil 58 der Nockenbahn 30 ist beim Steuerschieber 65 eine Nockenbahn 66 mit einem nur kurzen tiefer liegenden Teil 67 vorgesehen, welcher die Rampen 59 und 57 mit einem kurzen Leerweg zum Ausgleich von Toleranzen verbindet. Dies hat zur Folge, dass im Wesentlichen jede Verschiebung des Steuerschiebers 65 auch zu einer Verschwenkung des Stellhebels 24 führt. Dem trägt die Schaltkupplung 89 dadurch Rechnung, dass sie im Unterschied zur Schaltkupplung 39 der ersten Ausführungsform nur in denjenigen Teilbereichen der Deckelverschiebebewegung, bei denen eine Verstellung des Windabweisers 16 mittels der Ausstellmechanik 114 erwünscht ist, eine Antriebsverbindung zwischen einem Antriebsschlitten 90 des Deckelantriebs und einem Mitnehmer 109 herstellt, wobei die Verbindungsstange 36 den Mitnehmer 109 in gleicher Weise mit dem Steuerschieber 65 verbindet, wie im Falle des ersten Ausführungsbeispiels den Mitnehmer 37 mit dem Steuerschieber 29.

Statt des Einsatzes 38 des Antriebsschlittens 13 beim ersten Ausführungsbeispiel ist an dem Antriebsschlitten 90 ein Einsatz 91 vorgesehen, der mittels eines Gelenks 92 einen Schalthebel 93 der als Schalthebelkupplung ausgebildeten Schaltkupplung 89 schwenkbar trägt. Der Schalthebel 93 ist etwa L-förmig ausgebildet, wobei sich ein langer Schenkel 94 ausgehend vom Gelenk 92 im Wesentlichen in Verschieberichtung des Antriebsschlittens 90 erstreckt und in einen kurzen Schenkel 96 übergeht. Im Übergangsbereich zwischen den beiden Schenkeln 94 und 96 ist ein im Wesentlichen in Richtung der Achse des Gelenks 92 orientierter Nocken 95 vorgesehen, der den Schalthebel 93 nach oben überragt und mit einer Kulissenbahn 99 einer Steuerkulisse 98 in Eingriff bringbar ist. Eine Feder 108 zwischen dem Antriebsschlitten-Einsatz 91 und dem Schalthebel 93 sucht diesen dergestalt um die Achse des Gelenks 92 zu drehen, dass der Nocken 95 federnd vorgespannt an der Kulissenbahn 99 anliegt, welche tiefer liegende Teile 100 und 101, hochliegende Teile 102 und 103 sowie Rampen 104, 105, 106 und 107 aufweist. Die Kulissenbahn 99 ist an einem hinteren Aufsatzteil 97 vorgesehen, welches als weitere Unterscheidung zum hinteren Aufsatzteil 42 gemäß der ersten Ausführungsform keine Ausnehmung 41 jedoch eine Rastvorrichtung 112 mit einer Rastfeder 113 aufweist, mittels derer der Mitnehmer 109 in solchen Teilbereichen der Deckelverschiebebewegung mit Bezug zur Führungsschiene 14 arretiert werden kann, in denen der Mitnehmer 109 nicht an den Antriebsschlitten 90 angekuppelt ist.

Der Mitnehmer 109 der Ausführungsformen zwei bis vier des Fahrzeugdaches nimmt keinen Riegelstein 40 auf, wie dies beim Mitnehmer 37 der ersten Ausführungsform der Fall ist, und kommt ferner ohne Schieber 47, Stift 46 und Feder 48 aus. Stattdessen weist der Mitnehmer 109 zwei Ausnehmungen 110 und 111 auf, in welche der Schenkel 96 des Schalthebels 93 alternativ eingreifen kann, um den Mitnehmer 109 mit dem Antriebsschlitten 90 zu koppeln, sofern der Nocken 95 des Schalthebels 93 mit dem tiefer liegenden Teil 100 oder 101 der Kulissenbahn 99 in Eingriff steht.

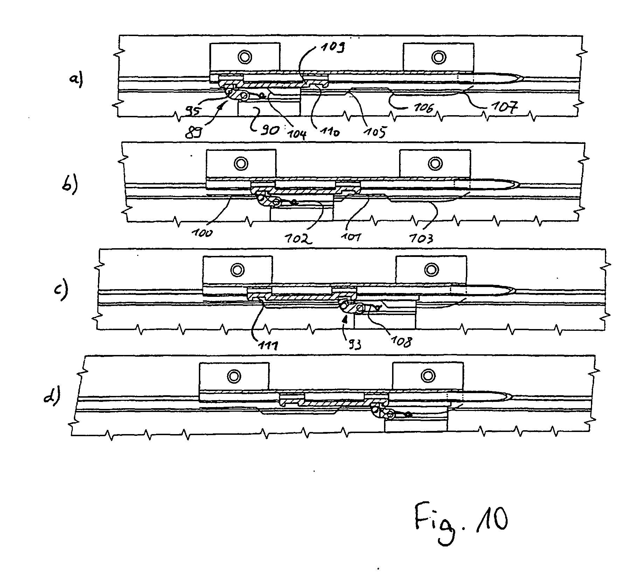

Der Funktionsweise der Schaltkupplung 89 wird nachfolgend anhand der in den Fign. 10 a) bis d) schematisch wiedergegebenen verschiedenen Phasen des Bewegungsablaufs erläutert:

In Fig. 10 a) greift der Schenkel 96 der Schaltkupplung 89 in die hintere Ausnehmung 111 des Mitnehmers 109 ein und sorgt so für eine Antriebsverbindung zwischen dem Antriebsschlitten 90 der Deckelantriebsvorrichtung und dem Steuerschieber 65. Während der Mitnehmer 109 vom Antriebsschlitten 90 von der in Fig. 10 a) wiedergegebenen Position in diejenige der Fig. 10 b) bewegt wird, läuft der Nocken 28 des Stellhebels 24 die Rampe 59 herab und erreicht bei der in Fig. 10 b) dargestellten Lage des Mitnehmers 109 den tiefer liegenden Teil 67 der Nockenbahn 66. In der Position nach Fig. 10 b) läuft der Nocken 95 auf die Rampe 104 der Kulissenbahn 99 auf, wodurch der Schalthebel 93 entgegen der Vorspannung der Feder 108 verschwenkt und außer Eingriff mit Bezug auf die Ausnehmung 111 gelangt. Gleichzeitig mit der hierdurch bewirkten Abkopplung des Mitnehmers 109 vom Antriebsschlitten 90 wird der Mitnehmer 109 durch die Rastvorrichtung 112 in der Position gemäß Fig. 10 b) mit Bezug zur Führungsschiene 14 arretiert. Bei weiterer Bewegung des Antriebsschlittens 90 nach vorne bewegt sich der Nocken 95 des Schalthebels 93 entlang des hochliegenden Teils 102 der Kulissenbahn 99, wobei der Deckel 10 weiter geschlossen wird, gleichzeitig der Steuerschieber 65 aber seine Position unverändert beibehält. Erst wenn der Antriebsschlitten 90 eine Position gemäß Fig. 10 c) erreicht hat, gelangt der Nocken 95 des Schalthebels 93 über die Rampe 105 in den tiefer liegenden Teil 101 der Kulissenbahn 99, wodurch der Schalthebel 93 der Vorspannung durch die Feder 108 folgend in Richtung auf den Mitnehmer 109 verschwenkt und der Schenkel 96 des Schalthebels 93 nun mit der vorderen Ausnehmung 110 in Eingriff kommt. Zwischen den in Fig. 10 c) und in Fig. 10 d) wiedergegebenen Positionen des Antriebsschlittens 90 befindet sich der Nocken 95 des Schalthebels 93 im Bereich des tiefer liegenden Teils 101 der Kulissenbahn 99, und der Mitnehmer 109 ist an den Antriebsschlitten 90 angekoppelt. In Fig. 10 d) ist schließlich eine Position des Antriebsschlittens 90 und des Mitnehmers 109 erreicht, bei welcher der Steuerschieber 65 - und damit die Ausstellmechanik 114 insgesamteine der Fig. 5 entsprechende Stellung einnimmt.

### Bezugszeichenliste

- 10: Deckel
- 11: Dachöffnung
- 12: Dachhaut
- 13: Antriebsschlitten
- 14: Führungsschiene
- 15: Antriebskabel
- 16: Windabweiser
- 17: Windabweiserblatt
- 18: Windabweiserarm
- 19: Gelenk
- 20: Ausstellmechanik
- 21: Dachrahmen
- 22: Raum
- 23: Nockenstelleinrichtung
- 24: Stellhebel
- 25: Ende von 24
- 26: Lasche
- 27: Schwenkachse
- 28: Nocken
- 29: Steuerschieber
- 30: Nockenbahn
- 31: Stift
- 32: Blattfeder
- 34: vorderes Aufsatzteil
- 35: Führungsrohr
- 36: Verbindungsstange
- 37: Mitnehmer
- 38: Antriebsschlitten-Einsatz
- 39: Schaltkupplung
- 40: Riegelstein
- 41: Ausnehmung
- 42: hinteres Aufsatzteil
- 43: Ausnehmung
- 44: Führungskanal
- 45: Längsbohrung
- 46: Stift
- 47: Schieber
- 48: Feder
- 49: hochliegender Teil von 30
- 50: Stirnfläche
- 51: Oberseite
- 52: Stirnkante
- 53: vordere Stirnfläche
- 54, 55: Schrägflächen
- 57: Rampe
- 58: tiefer liegender Teil von 30
- 59: Rampe
- 61, 62: Schrägflächen
- 63: Rückhaltevorrichtung
- 64: Stelleinrichtung
- 65: Steuerschieber
- 66: Nockenbahn
- 67: tiefer liegender Teil von 66
- 68, 69: Hebelarm
- 70, 71, 72: Gelenk
- 73: Lasche
- 74: Anschlag
- 75: maximaler Schwenkwinkel
- 76: Rückhaltevorrichtung
- 77: Lasche
- 78: Schenkel
- 79: Halter
- 80, 81: Führungsfläche
- 82: Langloch
- 83: Stift
- 84, 85, 86: Position
- 87: Rückhaltevorrichtung
- 88: Gurtband
- 89: Schaltkupplung
- 90: Antriebsschlitten
- 91: Antriebsschlitten-Einsatz
- 92: Gelenk
- 93: Schalthebel
- 94: Schenkel
- 95: Nocken
- 96: Schenkel
- 97: hinteres Aufsatzteil
- 98: Steuerkulisse
- 99: Kulissenbahn
- 100, 101: tiefer liegender Teil von 99
- 102, 103: hochliegender Teil von 99
- 104, 105, 106, 107: Rampe
- 108: Feder
- 109: Mitnehmer
- 110, 111: Ausnehmung
- 112: Rastvorrichtung
- 113: Rastfeder
- 114: Ausstellmechanik

## Patentansprüche

1. Fahrzeugdach mit mindestens einem Deckel (10), der zum wahlweisen Verschließen und mindestens teilweisen Freilegen einer Dachöffnung (11) mittels einer Deckelantriebsvorrichtung (13, 15, 90) verschiebbar ist, sowie mit einem im Bereich des vorderen Randes der Dachöffnung (11) angeordneten Windabweiser (16), der mittels einer Ausstellmechanik (20, 114) zwischen einer Ruhestellung bei geschlossenem Deckel (10) sowie einer voll ausgestellten Position und mindestens einer zwischen diesen Endpositionen liegenden vorbestimmten Zwischenposition beim Öffnen des Deckels (10) verstellbar ist, wobei die Ausstellmechanik eine Stelleinrichtung (23, 64) zum Beeinflussen der Ausstellhöhe des Windabweisers (16) aufweist, **dadurch gekennzeichnet, daß** ein Teil (29; 65) der Stelleinrichtung (23; 64) nur in einem vorgegebenen Teilbereich der Deckelverschiebebewegung mit der Deckelantriebsvorrichtung (13, 15, 90) gekuppelt ist, um in diesem Teilbereich der Deckelverschiebebewegung die Ausstellhöhe des Windabweisers (16) in Abhängigkeit von der jeweiligen Deckelstellung gezielt zu verändern und daß ein Mitnehmer (37; 109) mit diesem Teil (29; 65) der Stelleinrichtung (23; 64) in Antriebsverbindung steht und in Abhängigkeit von der jeweiligen Deckelstellung über eine Schaltkupplung (39; 89) mit der Deckelantriebsvorrichtung oder mit einem dachfesten Teil (14; 42; 97) gekuppelt ist.

2. Fahrzeugdach nach Anspruch 1, **dadurch gekennzeichnet, dass** der mit der Deckelantriebsvorrichtung (13, 15; 90) in einem vorgegebenen Teilbereich der Deckelverschiebebewegung gekuppelte Teil (29; 65) der Stelleinrichtung (23; 64) gleichsinnig mit der Deckelverschiebebewegung verstellbar ist.

3. Fahrzeugdach nach Anspruch 1 oder 2, **dadurch gekennzeichnet, dass** der Windabweiser (16) in Ausstellrichtung federnd vorgespannt ist und die Stelleinrichtung (23; 64) die Verstellung des Windabweisers in Ausstellrichtung begrenzt.

4. Fahrzeugdach nach einem der Ansprüche 1 bis 3, **dadurch gekennzeichnet, dass** der mit der Deckelantriebsvorrichtung (13, 15; 90) in einem vorgegebenen Teilbereich der Deckelverschiebebewegung gekuppelte Teil (29; 65) der Stelleinrichtung (23; 64) ein Steuerschieber (29; 65) mit einer Nockenbahn (30; 66) ist, die mit einem Nocken (28) an einem die Ausstellhöhe des Windabweisers (16) bestimmenden Stellhebel (24) zusammenwirkt.

5. Fahrzeugdach nach Anspruch 4, **dadurch gekennzeichnet, dass** der Stellhebel (24) um eine dachfeste Schwenkachse (27) schwenkbar ist und der Steuerschieber (29; 65) in Deckelverschieberichtung verstellbar gelagert ist.

6. Fahrzeugdach nach Anspruch 5, **dadurch gekennzeichnet, dass** die Schwenkachse (27) des Stellhebels (24) im wesentlichen in Dachquerrichtung verläuft, dass der Nocken (28) von dem einen Ende des Stellhebels gebildet ist, und dass der Stellhebel im Bereich seines anderen Endes (25) an einem windabweiserfesten Teil (26; 73; 77) anliegt und den Windabweiser (16) entgegen der Federvorspannung in der von der Nockenbahn (30; 66) bestimmten Ausstellhöhe hält.

7. Fahrzeugdach nach einem der vorhergehenden Ansprüche, **dadurch gekennzeichnet, dass** der Windabweiser (16) in Ausstellrichtung federnd vorgespannt ist und zur Begrenzung der Ausstellhöhe zwischen dem Windabweiser (16) und der Ausstellmechanik (20; 114) eine Rückhaltevorrichtung (63; 76; 87) vorgesehen ist.

8. Fahrzeugdach nach Anspruch 7, **dadurch gekennzeichnet, dass** die Rückhaltevorrichtung (63; 76; 87) bei Verstellung des Windabweisers (16) in Richtung auf seine Ruhestellung von einer ausgefahrenen in eine in vertikaler Richtung einen kleineren Raum einnehmende eingefahrene Position bringbar ist.

9. Fahrzeugdach nach Anspruch 4 und einem der Ansprüche 7 oder 8, **dadurch gekennzeichnet, dass** die Rückhaltevorrichtung (63; 76; 87) zwischen dem Windabweiser (16) und dem Stellhebel (24) vorgesehen ist.

10. Fahrzeugdach nach Anspruch 6 und einem der Ansprüche 7 bis 9, **dadurch gekennzeichnet, dass** das windabweiserfeste Teil (26; 73; 77) Teil der Rückhaltevorrichtung (63; 76) ist.

11. Fahrzeugdach nach einem der Ansprüche 7 bis 10, **dadurch gekennzeichnet, dass** die Rückhaltevorrichtung (63) einen um eine im Wesentlichen horizontal liegende Achse (70) schwenkbaren Hebel umfasst.

12. Fahrzeugdach nach einem der Ansprüche 7 bis 10, **dadurch gekennzeichnet, dass** die Rückhaltevorrichtung (76) im Wesentlichen in vertikaler Richtung zusammenschiebbar ist.

13. Fahrzeugdach nach einem der Ansprüche 7 bis 10, **dadurch gekennzeichnet, dass** die Rückhaltevorrichtung (87) ein biegeelastisches Band (88) umfasst.

14. Fahrzeugdach nach einem der Ansprüche 1 bis 13, **dadurch gekennzeichnet, dass** der Mitnehmer (37; 109) mit einem einen Teil der Deckelantriebsvorrichtung (13; 15; 90) bildenden Deckelantriebsschlitten (13; 90) kuppelbar ist.

15. Fahrzeugdach nach einem der Ansprüche 1 bis 14, **dadurch gekennzeichnet, dass** die Schaltkupplung (39; 89) selbsttätig in Abhängigkeit von der Bewegung der Deckelantriebsvorrichtung (13; 15; 90) geschaltet ist.

16. Fahrzeugdach nach Anspruch 15, **dadurch gekennzeichnet, dass** die Schaltkupplung (39) als Riegelsteinkupplung ausgebildet ist.

17. Fahrzeugdach nach Anspruch 16, **gekennzeichnet durch** einen federvorgespannten Schieber (47), der einen in dem Mitnehmer (37) verstellbar gelagerten Riegelstein (40) der Riegelsteinkupplung (39) mit dem dachfesten Teil (14; 42) so lange in Eingriff hält, wie der Mitnehmer (37) von der Deckelantriebsvorrichtung (13, 15) abgekuppelt ist.

18. Fahrzeugdach nach Anspruch 15, **dadurch gekennzeichnet, dass** die Schaltkupplung (89) als Schalthebelkupplung ausgebildet ist.

19. Fahrzeugdach nach Anspruch 18, **dadurch gekennzeichnet, dass** die Schalthebelkupplung (89) so ausgebildet ist, dass der Mitnehmer (109) mit der Deckelantriebsvorrichtung (15; 90) nur in solchen Teilbereichen der Deckelverschiebebewegung gekuppelt ist, in welchen eine Verstellung des Windabweisers (16) mittels der Ausstellmechanik (114) erfolgt.

20. Fahrzeugdach nach Anspruch 18 oder 19, **dadurch gekennzeichnet, dass** die Schalthebelkupplung (89) einen schwenkbaren Schalthebel (93) umfasst, der mittels einer Steuerkulisse (98) betätigbar ist.

21. Fahrzeugdach nach Anspruch 20, **dadurch gekennzeichnet, dass** der Schalthebel (93) an einem Teil (91) der Deckelantriebsvorrichtung (90) und die Steuerkulisse (98) an dem dachfesten Teil (97) vorgesehen ist.

22. Fahrzeugdach nach einem der Ansprüche 18 bis 21, **gekennzeichnet durch** eine federbetätigte Rastvorrichtung (112), mittels der der Mitnehmer (109) in solchen Teilbereichen der Deckelverschiebbewegung dachfest arretierbar ist, in denen er von der Deckelantriebsvorrichtung (15; 90) abgekuppelt ist.

23. Fahrzeugdach nach einem der Ansprüche 1 bis 22, **dadurch gekennzeichnet, dass** der mit der Deckelantriebsvorrichtung (13, 15; 90) in einem vorgegebenen Teilbereich der Deckelverschiebebewegung gekuppelte Teil (29; 65) der Stelleinrichtung (23; 64) mit dem Mitnehmer (37; 109) über eine an einer seitlichen Führungsschiene (14) abgestützte Verbindungsstange (36) in Antriebsverbindung steht.

24. Fahrzeugdach nach Anspruch 23, **dadurch gekennzeichnet, dass** die Verbindungsstange (36) in einem Kanal der Führungsschiene (14) gelagert ist.

25. Fahrzeugdach nach Anspruch 23, **dadurch gekennzeichnet, dass** die Verbindungsstange (36) in einer mit der Führungsschiene (14) fest verbundenen Anbaugruppe gelagert ist.

26. Fahrzeugdach nach Anspruch 25, **dadurch gekennzeichnet, dass** die Anbaugruppe zwei mit der Führungsschiene (14) fest verbundene Aufsatzteile und ein sich zwischen diesen erstreckendes Führungsrohr (35) aufweist.

## Claims

1. Vehicle roof having at least one panel (10) which, in order to close and at least partly expose a roof opening (11) as desired, can be displaced by means of a panel drive device (13, 15; 90), and also having a wind deflector (16) which is arranged in the region of the front edge of the roof opening (11) and which, by means of a raising mechanism (20; 114), can be displaced between a rest position with the panel (10) closed and a fully raised position and at least one predetermined intermediate position lying between these end positions as the panel (10) is opened, the raising mechanism having an actuating device (23; 64) for influencing the raised height of the wind deflector (16), **characterized in that** part (29; 65) of the actuating device (23; 64) is coupled to the panel drive device (13, 15; 90) only in a predefined subregion of the panel displacement movement, in order, in this subregion of the panel displacement movement, to change the raised height of the wind deflector (16) specifically as a function of the respective panel position, and **in that** a driver (37; 109) has a drive connection to this part (29; 65) of the actuating device (23; 64) and, depending on the respective panel position, is coupled via a switching clutch (39; 89) to the panel drive device or to a part (14; 42; 97) fixed to the roof.

2. Vehicle roof according to Claim 1, **characterized in that** the part (29; 65) of the actuating device (23; 64) that is coupled to the panel drive device (13, 15; 19) in a predefined subregion of the panel displacement movement can be displaced in the same direction as the panel displacement movement.

3. Vehicle roof according to Claim 1 or 2, **characterized in that** the wind deflector (16) is spring-prestressed in the raising direction and the actuating device (23; 64) limits the displacement of the wind deflector in the raising direction.

4. Vehicle roof according to one of Claims 1 to 3, **characterized in that** the part (29; 65) of the actuating device (23; 64) that is coupled to the panel drive device (13, 15; 90) in a predefined subregion of the panel displacement movement is a control slide (29; 65) having a cam path (30; 66) which interacts with a cam (28) on an actuating lever (24) determining the raised height of the wind deflector (16).

5. Vehicle roof according to Claim 4, **characterized in that** the actuating lever (24) can be pivoted about a pivot axis (27) fixed to the roof, and the control slide (29; 65) is mounted such that it can be displaced in the panel displacement direction.

6. Vehicle roof according to Claim 5, **characterized in that** the pivot axis (27) of the actuating lever (24) extends substantially in the roof transverse direction, **in that** the cam (28) is formed by one end of the actuating lever, and **in that**, in the region of its other end (25), the actuating lever bears on a part (26; 73; 77) fixed to the wind deflector and holds the wind deflector (16) at the raised height determined by the cam path (30; 66), counter to the spring prestress.

7. Vehicle roof according to one of the preceding claims, **characterized in that** the wind deflector (16) is spring-prestressed in the raised direction and, in order to limit the raised height, a restraining device (63; 76; 87) is provided between the wind deflector (16) and the raising mechanism (20; 114).

8. Vehicle roof according to Claim 7, **characterized in that**, when the wind deflector (16) is deflected in the direction of its rest position, the restraining device (63; 76; 87) can be moved from an extended position into a retracted position occupying a smaller space in the vertical direction.

9. Vehicle roof according to Claim 4 and either of Claims 7 and 8, **characterized in that** the restraining device (63; 76; 87) is provided between the wind deflector (16) and the actuating lever (24).

10. Vehicle roof according to Claim 6 and one of Claims 7 to 9, **characterized in that** the part (26; 73; 77) fixed to the wind deflector is part of the restraining device (63; 76).

11. Vehicle roof according to one of Claims 7 to 10, **characterized in that** the restraining device (63) comprises a lever that can be pivoted about a substantially horizontal axis (70).

12. Vehicle roof according to one of Claims 7 to 10, **characterized in that** the restraining device (76) can be collapsed substantially in the vertical direction

13. Vehicle roof according to one of Claims 7 to 10, **characterized in that** the restraining device (87) comprises a resilient strap (88).

14. Vehicle roof according to one of Claims 1 to 13, **characterized in that** the driver (37; 109) can be coupled to a panel drive carriage (13; 90) forming part of the panel drive device (13, 15; 90).

15. Vehicle roof according to one of Claims 1 to 14, **characterized in that** the switching clutch (39; 89) is switched automatically as a function of the movement of the panel drive device (13, 15; 90).

16. Vehicle roof according to Claim 15, **characterized in that** the switching clutch (39) is formed as a locking block clutch.

17. Vehicle roof according to Claim 15, **characterized by** a spring-prestressed slide (47), which keeps a locking block (40) of the locking block clutch (39), displaceably mounted in the driver (37), in engagement with the part (14; 42) fixed to the roof as long as the driver (37) is uncoupled from the panel drive device (13, 15).

18. Vehicle roof according to Claim 15, **characterized in that** the switching clutch (89) is formed as a switching lever clutch.

19. Vehicle roof according to Claim 18, **characterized in that** the switching lever clutch (89) is formed in such a way that the driver (109) is coupled to the panel drive device (15; 90) only in those subregions of the panel displacement movement in which the wind deflector (16) is displaced by means of the raising mechanism (114).

20. Vehicle roof according to Claim 18 or 19, **characterized in that** the switching lever clutch (89) comprises a pivotable switching lever (93) which can be actuated by means of a slotted control guide (98).

21. Vehicle roof according to Claim 20, **characterized in that** the switching lever (93) is provided on a part (91) of the panel drive device (90), and the slotted control guide (98) is provided on the part (97) fixed to the roof.

22. Vehicle roof according to one of Claims 18 to 21, **characterized by** a spring-actuated latching device (112), by means of which the driver (109) can be locked fixed to the roof in those subregions of the panel displacement movement in which it is uncoupled from the panel drive device (15; 90).

23. Vehicle roof according to one of Claims 1 to 22, **characterized in that** the part (29; 65) of the actuating device (23; 64) which is coupled to the panel drive device (13, 15; 90) in a predefined subregion of the panel displacement movement has a drive connection to the driver (37; 109) via a connecting rod (36) supported on a lateral guide rail (14).

24. Vehicle roof according to Claim 23, **characterized in that** the connecting rod (36) is mounted in a channel of the guide rail (14).

25. Vehicle roof according to Claim 23, **characterized in that** the connecting rod (36) is mounted in an extension unit firmly connected to the guide rail (14).

26. Vehicle roof according to Claim 25, **characterized in that** the extension unit has two attached parts firmly connected to the guide rail (14) and a guide tube (35) extending between these.

## Revendications

1. Toit de véhicule comprenant au moins un couvercle (10) pouvant être déplacé au moyen d'un dispositif d'entraînement de couvercle (13, 15 ; 90) pour permettre sélectivement la fermeture et la libération au moins partielle d'une ouverture de toit (11), ainsi qu'un déflecteur de vent (16) disposé dans la zone du bord avant de l'ouverture de toit (11) et qui est réglable au moyen d'un mécanisme d'inclinaison (20 ; 114) entre une position de repos lorsque le couvercle (10) est fermé ainsi qu'entre une position totalement inclinée et au moins une position intermédiaire prédéfinie se situant entre ces deux positions finales lorsque le couvercle (10) est ouvert, le mécanisme d'inclinaison présentant un système d'actionnement (23 ; 64) permettant d'influer sur la hauteur d'inclinaison du déflecteur de vent (16), **caractérisé en ce qu'**une partie (29 ; 65) du système d'actionnement (23 ; 64) est couplée, seulement dans une zone partielle prédéfinie du mouvement de déplacement du couvercle, au dispositif d'entraînement de couvercle (13, 1.5 ; 90) afin de modifier de manière ciblée, dans cette zone partielle du mouvement de déplacement du couvercle, la hauteur d'inclinaison du déflecteur de vent (16) en fonction de la position respective du couvercle et **en ce qu'**un entraîneur (37 ; 109) est relié avec cette partie (29 ; 65) du système d'actionnement (23 ; 64) de façon à l'entraîner et est couplé, en fonction de la position respective du couvercle, par un accouplement de commutation (39 ; 89) au dispositif d'entraînement de couvercle on une partie positionnée fixement sur le toit (14 ; 42 ; 97).

2. Toit de véhicule selon la revendication 1, **caractérisé en ce que** la partie (29 ; 65) du système d'actionnement (23 ; 64) couplée au dispositif d'entraînement de couvercle (13, 15 ; 90) est réglable, dans une zone partielle prédéfinie du mouvement de déplacement du couvercle, dans le même sens que le mouvement de déplacement du couvercle.

3. Toit de véhicule selon la revendication 1 ou 2, **caractérisé en ce que** le déflecteur de vent (16) est précontraint par ressort dans le sens d'inclinaison et que le système d'actionnement (23 ; 64) limite le réglage du déflecteur de vent dans le sens d'inclinaison.

4. Toit de véhicule selon l'une quelconque des revendications 1 à 3, **caractérisé en ce que** la partie (29 ; 65) du système d'actionnement (23 ; 64) couplée au dispositif d'entraînement de couvercle (13, 15 ; 90) dans une zone partielle prédéfinie du mouvement de déplacement du couvercle est un tiroir de commande (29 ; 65) avec une piste de came (30 ; 66) qui coopère avec une came (28) au niveau d'un levier d'actionnement (24) définissant la hauteur d'inclinaison du déflecteur de vent (16).

5. Toit de véhicule selon la revendication 4, **caractérisé en ce que** le levier d'actionnement (24) peut pivoter autour d'un axe de pivotement positionné fixement sur le toit (27) et le tiroir de commande (29 ; 65) s'appuie de manière réglable dans le sens de déplacement du couvercle.

6. Toit de véhicule selon la revendication 5, **caractérisé en ce que** l'axe de pivotement (27) du levier d'actionnement (24) s'étend sensiblement dans le sens transversal du toit, **en ce que** la came (28) est constituée par une extrémité du levier d'actionnement (24) et **en ce que** le levier d'actionnement, au niveau de son autre extrémité (25), est relié à une partie positionnée fixement sur le déflecteur de vent (26 ; 73 ; 77) et maintient le déflecteur de vent (16) à l'opposé de la précontrainte de ressort à la hauteur d'inclinaison définie par la piste de came (30 ; 66).

7. Toit de véhicule selon l'une quelconque des revendications précédentes, **caractérisé en ce que** le déflecteur de vent (16) est précontraint par ressort dans le sens d'inclinaison et, pour limiter la hauteur d'inclinaison entre le déflecteur de vent (16) et le mécanisme d'inclinaison (20 ; 114), un dispositif de retenue (63 ; 76 ; 87) est prévu.

8. Toit de véhicule selon la revendication 7, **caractérisé en ce que** le dispositif de retenue (63 ; 76 ; 87), lors du réglage du déflecteur de vent (16) en direction de sa position de repos, peut être amené d'une position sortie a une position rentrée occupant un espace plus réduit dans le sens vertical.

9. Toit de véhicule selon la revendication 4 et selon l'une quelconque des revendications 7 ou 8, **caractérisé en ce que** le dispositif de retenue (63 ; 76; 87) est prévu entre le déflecteur de vent (16) et le levier d'actionnement (24).

10. Toit de véhicule selon la revendication 6 et selon l'une quelconque des revendications 7 9, **caractérisé en ce que** la partie positionnée fixement sur le déflecteur de vent (26 ; 73 ; 77) fait partie du dispositif de retenue (63 ; 76).

11. toit de véhicule selon l'une quelconque des revendications 7 à 10, **caractérisé en ce que** le dispositif de retenue (63) comprend un levier pouvant pivoter autour d'un axe (70) placé sensiblement à l'horizontale.

12. Toit de véhicule selon l'une quelconque des revendications 7 à 10, **caractérisé en ce que** le dispositif de retenue (76) peut être rapproché en glissant sensiblement dans le sens vertical.

13. Toit de véhicule selon l'une quelconque des revendications 7 à 10, **caractérisé en ce que** le dispositif de retenue (87) comprend une bande élastique en flexion (88).

14. Toit de véhicule selon l'une quelconque des revendications 1 à 13, **caractérisé en ce que** l'entraîneur (37 ; 109) peut être couplé à un chariot d'entraînement de couvercle (13; 90) constituant une partie du dispositif d'entraînement de couvercle (13, 15 ; 90).

15. Toit de véhicule selon l'une quelconque des revendications 1 à 14, **caractérisé en ce que** l'accouplement de commutation (39 ; 89) est commuté automatiquement en fonction du mouvement du dispositif d'entraînement de couvercle (13, 15 ; 90).

16. Toit de véhicule selon la revendication 15, **caractérisé en ce que** l'accouplement de commutation (39) est réalisé sous forme d'un accouplement à galet de verrouillage.

17. Toit de véhicule selon la revendication 16, **caractérisé par** un tiroir précontraint par ressort (47) qui maintient un galet de verrouillage (40) du couplage à galet de verrouillage (39) s'appuyant de manière réglable dans l'entraîneur (37) en prise dans la partie positionnée fixement sur le toit (14 ; 42) tant que l'entraîneur (37) est désaccouplé du dispositif d'entraînement de couvercle (13, 15).

18. Toit de véhicule selon la revendication 15, **caractérisé en ce que** l'accouplement de commutation (89) est réalisé sous forme d'un couplage à levier de commutation.

19. Toit de véhicule selon la revendication 18, **caractérisé en ce que** le couplage de commutation (89) est réalisé de manière à ce que l'entraîneur (109) ne soit couplé au dispositif d'entraînement de couvercle (15 ; 90) que dans les zones partielles du mouvement de déplacement du couvercle dans lesquels a lieu un réglage du déflecteur de vent (16) au moyen du dispositif d'inclinaison (114).

20. Toit de véhicule selon la revendication 18 ou 19, **caractérisé en ce que** le couplage à levier de commutation (89) comprend un levier de commutation pivotant (93) qui est actionnable au moyen d'une coulisse de commande (98).

21. Toit de véhicule selon la revendication 20, **caractérisé en ce que** le levier de commutation (93) est prévu au niveau d'une partie (91) du dispositif d'entraînement de couvercle (90) et que la coulisse de commande (98) est prévue au niveau de la partie positionnée fixement sur le toit (97).

22. Toit de véhicule selon l'une quelconque des revendications 18 à 21, **caractérisé par** un dispositif d'enclenchement actionné par ressort (112) au moyen duquel l'entraîneur (109) peut être bloqué fixement sur le toit dans ces zones partielles du mouvement de déplacement du couvercle dans lesquels il est désaccouplé du dispositif d'entraînement de couvercle (15 ; 90).

23. Toit de véhicule selon l'une quelconque des revendications 1 à 22, **caractérisé en ce que** la partie (29 ; 65) du système d'actionnement (23 ; 64) couplée au dispositif d'entraînement de couvercle (13, 15 ; 90) dans une zone partielle prédéfinie du mouvement de déplacement du couvercle est reliée avec l'entraîneur (37 ; 109) de façon à l'entraîner par l'intermédiaire d'une barre de raccordement (36) s'appuyant au niveau d'un rail de guidage latéral (14).

24. Toit de véhicule selon la revendication 23, **caractérisé en ce que** la barre de raccordement (36) est logée dans un canal du rail de guidage (14).

25. Toit de véhicule selon la revendication 23, **caractérisé en ce que** la barre de raccordement (36) est logée dans un groupe de montage raccordé fixement au rail de guidage (14).

26. Toit de véhicule selon la revendication 25, **caractérisé en ce que** le groupe de montage présente deux parties rapportées raccordées fixement au rail de guidage (14) et un tuyau de guidage (35) s'étendant entre celles-ci.
